(19) Europäisches Patentamt
European Patent Office
Office européen des brevets

(11) **EP 2 032 407 B1**

(12) **FASCICULE DE BREVET EUROPEEN**

(45) Date de publication et mention
de la délivrance du brevet:
**19.01.2011 Bulletin 2011/03**

(51) Int Cl.:
***B60W 30/16*** *(2006.01)*    ***B60W 40/10*** *(2006.01)*
***B60W 50/06*** *(2006.01)*

(21) Numéro de dépôt: **07788986.3**

(22) Date de dépôt: **12.06.2007**

(86) Numéro de dépôt international:
**PCT/FR2007/051419**

(87) Numéro de publication internationale:
**WO 2007/147998 (27.12.2007 Gazette 2007/52)**

(54) **PROCEDE DE REGULATION DE LA DISTANCE ENTRE DEUX VEHICULES**

VERFAHREN ZUR REGULIERUNG DES ABSTANDES ZWISCHEN ZWEI FAHRZEUGEN

METHOD FOR REGULATING THE DISTANCE BETWEEN TWO VEHICLES

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **23.06.2006 FR 0605678**

(43) Date de publication de la demande:
**11.03.2009 Bulletin 2009/11**

(73) Titulaire: **RENAULT S.A.S.**
**92100 Boulogne Billancourt (FR)**

(72) Inventeurs:
- **AYMA, Vincent**
  **75507 Paris (FR)**
- **MARTINEZ, Didier**
  **27920 Saint Etienne Sur Bailleul (FR)**

(56) Documents cités:
**EP-A- 0 612 641**    **EP-A- 1 060 938**
**EP-A- 1 225 079**    **WO-A-2006/075114**
**US-A- 3 820 622**

**Description**

La présente invention concerne un procédé de régulation de la distance entre deux véhicules automobiles circulant dans la même direction. L'invention s'applique notamment aux systèmes de régulation de distance, destinés à améliorer le confort de conduite des véhicules automobiles. EP 612641 A décrit un tel système.

Certains véhicules automobiles sont en effet équipés d'un système de régulation de distance, permettant de maintenir automatiquement le véhicule à une distance donnée d'un véhicule cible, asservie autour d'une valeur de distance de consigne prédéterminée. Pour ce faire, la régulation intervient par le contrôle de forces d'accélération et de décélération appliquées au véhicule, par exemple par pilotage d'un moyen d'admission d'air pour les moteurs à essence ou d'un moyen d'injection pour les moteurs de type Diesel, par pilotage de la force de freinage, et éventuellement par la gestion des rapports de la boîte de vitesses du véhicule.

Le document de brevet US 6,233,515 décrit un exemple d'architecture pour la commande d'un tel système de régulation de distance entre un véhicule suiveur équipé du système et un véhicule cible. Plus particulièrement, le véhicule suiveur est équipé d'un dispositif de télémesure de type infrarouge ou radar, permettant de mesurer la distance et la vitesse relative entre le véhicule suiveur et un véhicule cible, ainsi que d'un capteur de vitesse embarqué délivrant une information sur la vitesse du véhicule. Une loi de commande du système délivre alors une commande déterminant des forces d'accélération et de décélération à appliquer au véhicule à partir de la distance relative mesurée, de la vitesse du véhicule suiveur et de sa vitesse relative par rapport au véhicule cible, et de la distance de consigne, permettant de réguler la vitesse du véhicule suiveur de façon à maintenir sensiblement constante la distance entre les véhicules autour de la valeur de consigne.

Cette régulation est réalisée par une action sélective sur le couple moteur et les freins, selon qu'une force motrice ou une force de freinage doit être appliquée au système pour respecter la distance de consigne.

Dans un tel système, l'asservissement de la position du véhicule suiveur à une position cible de sorte à respecter la distance prédéterminée entre les véhicules, repose sur une boucle de régulation dans laquelle la distance relative entre les véhicules d'une part, et la vitesse relative entre les véhicules d'autre part, constituent les retours de boucle pour l'élaboration de la commande à appliquer au véhicule.

Or, ce système est peu performant aux basses vitesses, typiquement de l'ordre de 30 à 60 Km/h, notamment pour pouvoir répondre rapidement à des variations fortes d'accélération du véhicule cible, et est de plus complexe à configurer pour une régulation optimale de l'inter-distance.

Un objet de l'invention est donc de pallier ces inconvénients en prévoyant un procédé de commande de régulation de la distance entre véhicules automobiles, capable de répondre rapidement aux perturbations mêmes aux basses vitesses. Un autre objet est d'obtenir une régulation qui soit facilement réglable.

Avec ces objectifs en vue, l'invention concerne un procédé de commande d'un système de régulation d'une distance inter-véhicules entre un véhicule cible et un véhicule suiveur, le système de régulation étant embarqué sur le véhicule suiveur, lequel comprend des moyens de commande électronique de la vitesse du véhicule suiveur, ledit procédé comprenant l'élaboration d'une loi de commande de régulation de la distance inter-véhicules, en réponse à un écart entre une valeur de la vitesse du véhicule suiveur et une valeur de vitesse de consigne correspondant à une valeur détectée de la vitesse du véhicule cible, et à un écart entre une valeur de la distance entre le véhicule cible et le véhicule suiveur et une valeur de distance de consigne, les moyens de commande de la vitesse du véhicule suiveur agissant pour réguler le comportement dynamique du véhicule suiveur sur la base de la loi de commande, ledit procédé étant **caractérisé en ce que** la loi de commande de régulation de la distance inter-véhicule est en outre élaborée en réponse à un écart entre une valeur de l'accélération du véhicule suiveur et une valeur d'accélération de consigne correspondant à une valeur détectée de l'accélération du véhicule cible.

Selon un mode de réalisation préféré, l'élaboration de la loi de commande de régulation de la distance inter-véhicule comprend la multiplication de l'écart de vitesse par un gain en vitesse paramétrable, la multiplication de l'écart de distance par un gain en distance paramétrable et la multiplication de l'écart d'accélération par un gain en accélération paramétrable.

Avantageusement, les trois gains, respectivement en vitesse, en distance et en accélération, utilisés pour l'élaboration de la loi de commande à partir des trois écarts, respectivement en vitesse, en distance et en accélération, sont déterminés en fixant les trois paramètres suivants : $\xi$, $\omega_n$ et $G_0$, correspondant respectivement à l'amortissement, la pulsation propre et le taux d'atténuation en hautes fréquences du système de régulation.

Selon une caractéristique, la régulation du comportement dynamique du véhicule suiveur sur la base de la loi de commande consiste à réguler une force motrice du véhicule.

De préférence, la régulation de la force motrice du véhicule comprend le pilotage d'un moyen d'admission d'air pour les moteurs à essence ou d'un moyen d'injection pour les moteurs de type Diesel.

Selon une autre caractéristique, la régulation du comportement dynamique du véhicule suiveur sur la base de la loi de commande consiste à réguler une force de freinage.

De préférence, la valeur de la distance de consigne entre le véhicule cible et le véhicule suiveur est déterminée en fonction de la vitesse du véhicule suiveur.

D'autres caractéristiques et avantages de la présente invention apparaîtront plus clairement à la lecture de la description suivante donnée à titre d'exemple illustratif et non limitatif et faite en référence à la figure unique suivante :

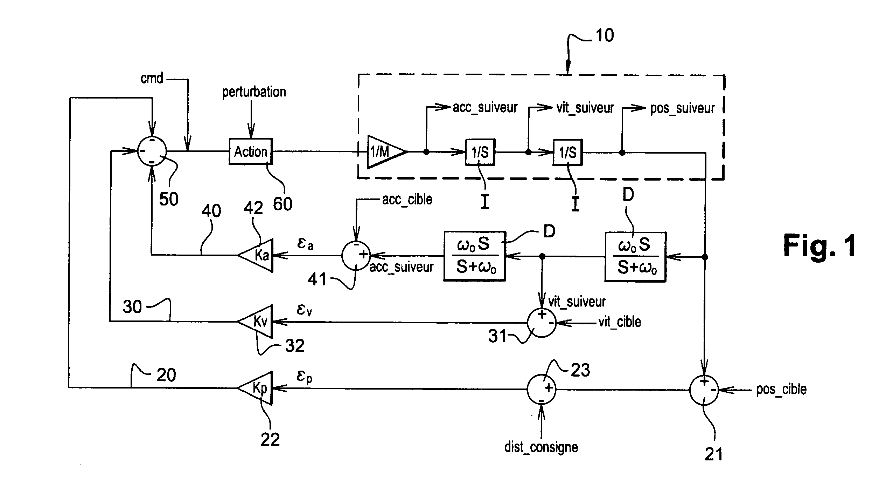

- la figure 1, qui illustre une modélisation du système de régulation selon l'invention.

Le but du système de régulation de distance selon l'invention est d'établir une régulation de telle façon à ce que le véhicule suiveur équipé du système puisse suivre à une distance donnée un véhicule se situant devant, dit véhicule cible.

La modélisation du système à la figure 1 illustre une approche fréquentielle entrée/sortie du système de régulation par fonctions de transfert et calcul symbolique avec l'opérateur de transformation de Laplace s.

Le véhicule suiveur 10 est modélisé à la figure 1 par un multiplieur 1/M, M étant la masse du véhicule, suivi de deux intégrateurs I en série symbolisés par leur fonction de transfert 1/s. Ainsi, en appliquant en entrée du multiplieur 1/M la force appliquée au véhicule, on récupère la valeur de l'accélération du véhicule acc_suiveur, par application de la loi de la dynamique selon laquelle l'accélération d'un système est proportionnelle à la force appliquée et inversement proportionnelle à sa masse. Le premier intégrateur 1/s fournit alors la vitesse du véhicule suiveur vit_suiv à partir de l'accélération et le second intégrateur 1/s fournit la position du véhicule suiveur pos_suiv à partir de la vitesse. Le comportement du véhicule suiveur peut ainsi être complètement modélisé à partir de ces transferts permettant d'estimer l'accélération à partir de la force, la vitesse à partir de l'accélération et la position à partir de la vitesse.

L'architecture du système de régulation de distance selon l'invention repose sur la mise en oeuvre de trois boucles de réaction 20, 30 et 40, permettant de réguler le système par un retour d'état sur les trois données que sont la position du véhicule suiveur, la vitesse du véhicule suiveur et l'accélération du véhicule suiveur par rapport, respectivement, à la position du véhicule cible, la vitesse du véhicule cible et l'accélération du véhicule cible, fixant les consignes du système ainsi asservi.

A l'entrée des boucles 30 et 40 permettant le retour d'état sur la vitesse et l'accélération, un bloc D correcteur avance de phase, assurant la fonction de dérivateur, réalise la transcription de la position du véhicule suiveur en vitesse vit_suiveur. Le signal de sortie de ce bloc représentatif de la vitesse du véhicule suiveur est alors appliqué à un second bloc D du même type, permettant de transcrire la vitesse du véhicule suiveur en accélération du véhicule suiveur acc_suiveur.

La fonction de transfert permettant d'estimer la vitesse à partir de la position et l'accélération à partir de la vitesse est de la forme $\omega_0 s/(s+\omega_0)$, dans laquelle $\omega_0$ représente la pulsation de coupure à laquelle on sature la dérivation. En effet, en analyse fréquentielle, un dérivateur ne peut pas être modélisé sur une plage de fréquence infinie, notamment pour les fréquences très hautes.

Chaque boucle comprend alors un comparateur, respectivement 21, 31 et 41, qui permet de déterminer l'écart entre, respectivement la position du véhicule suiveur pos_suiveur, la vitesse du véhicule suiveur vit_suiveur et l'accélération du véhicule suiveur acc_suiveur et la consigne, respectivement de position du véhicule cible pos_cible, de vitesse du véhicule cible vit_cible et d'accélération du véhicule cible acc_cible.

Ainsi, le comparateur 21 fournit un signal représentatif de la distance entre le véhicule cible et le véhicule suiveur. Cette valeur de distance est fournie à un comparateur supplémentaire 23 de la boucle 20, qui permet de déterminer l'écart entre la valeur de la distance entre le véhicule cible et le véhicule suiveur et la valeur de la distance de consigne dist_consigne devant être maintenue automatiquement par le système de régulation entre le véhicule suiveur et le véhicule cible, et cela en contrôlant l'accélération du véhicule suiveur. De préférence, la distance de consigne entre le véhicule cible et le véhicule suiveur est définie proportionnellement à la vitesse du véhicule suiveur.

Un signal d'erreur $\varepsilon_p$ est alors fourni en sortie de ce comparateur 23, représentatif de l'écart entre la consigne de distance et le calcul.

Le comparateur 31 de la boucle 30 de retour d'état sur la vitesse, fournit quant à lui un signal d'erreur $\varepsilon_v$, représentatif de l'écart entre la vitesse du véhicule suiveur et celle du véhicule cible et qui correspond donc à la vitesse relative entre les véhicules.

Enfin, le comparateur 41 de la boucle 40 de retour d'état sur l'accélération, fournit un signal d'erreur $\varepsilon_a$, représentatif de l'écart entre l'accélération du véhicule suiveur et celle du véhicule cible et qui correspond donc à l'accélération relative entre les véhicules.

Chaque boucle comprend en outre un correcteur, respectivement 22, 32 et 42, prévu pour élaborer à partir du signal d'erreur, respectivement $\varepsilon_p$, $\varepsilon_v$, et $\varepsilon_a$, fourni par chaque comparateur de boucle, un ordre de commande de régulation au système, par application d'un gain multiplicateur à chacun des signaux d'erreur générés. Les différents correcteurs 22, 32 et 42 présente des fonctions de transfert telles que le comportement du système de régulation s'en trouve amélioré. Nous reviendrons plus en détail par la suite sur la détermination de ces différents gains de boucle.

Ainsi, le correcteur 22 applique un gain en position $K_p$ au signal d'erreur $\varepsilon_p$, le correcteur 32 applique un gain en vitesse $K_v$ au signal d'erreur $\varepsilon_v$, et le correcteur 42 applique un gain en accélération $K_a$ au signal d'erreur $\varepsilon_a$. Le gain

en position $K_p$ est prévu pour agir aux fréquences basses du système, le gain en vitesse $K_v$ pour agir aux fréquences intermédiaires et le gain en accélération $K_a$ pour agir aux hautes fréquences.

Les signaux de sortie de chacun des correcteurs sont appliqués à un sommateur 50, en sortie duquel est alors élaborée la loi de commande cmd de régulation de la distance inter-véhicules.

Une action est alors appliquée sur le véhicule suiveur par l'intermédiaire de moyens 60 de commande électronique de la vitesse du véhicule suiveur, qui vont agir pour réguler le comportement dynamique du véhicule suiveur sur la base de la loi de commande cmd, de sorte à maintenir constante la distance inter-véhicules conformément à la consigne et ce, indépendamment de la perturbation indiquée sur la figure 1, symbolisant les variations d'accélération du véhicule cible.

Pour ce faire, les moyens de commande transforment la loi de commande cmd de régulation du système en grandeurs physiques permettant de régler la vitesse du véhicule suiveur. Typiquement, pour respecter la loi de commande de régulation élaborée, les moyens de commande peuvent agir sur la force motrice du véhicule, en contrôlant un moyen d'admission d'air pour les moteurs à essence ou un moyen d'injection pour les moteurs de type Diesel, ou sur la force de freinage appliquée au véhicule.

La figure 1 permet donc de modéliser le comportement du véhicule suiveur, en décrivant une fonction de transfert du système entre la position du véhicule suiveur et une perturbation en commande, c'est-à-dire une variation d'accélération de la cible.

La fonction de transfert F du système de régulation entre la position du véhicule suiveur et la perturbation de commande est la suivante :

$$F = \frac{(s+\omega_0)^2}{Ms^4 + (2M\omega_0)s^3 + (M\omega_0^2 + K_a\omega_0^2 + K_v\omega_0 + K_p)s^2 + (K_v\omega_0^2 + 2K_p\omega_0)s + Kp\omega_0^2}$$

Cette fonction de transfert est donc d'ordre 4. On considère dans un premier temps que le système est parfait et que le transfert pour les dérivations permettant d'estimer la vitesse du véhicule suiveur à partir de la position et l'accélération à partir de la vitesse, peut être modélisé par s à la place de $\omega_0 s/(s+\omega_0)$. Dans ce cas, la fonction de transfert F est du second ordre et peut s'écrire :

$$F_{parfait} = \frac{1}{(M+K_a)s^2 + K_v s + K_p}$$

Il est alors possible d'obtenir les trois gains de boucle $K_a$, $K_p$ et $K_v$ en fixant la dynamique du système, en effectuant l'analogie suivante entre le dénominateur de $F_{parfait}$ et :

$$s^2 + 2\xi\omega_n s + \omega_n^2$$

$\xi$ correspondant à l'amortissement et $\omega_n$ à la pulsation propre du système de régulation modélisé à la figure 1.

Les deux équations obtenues ci-dessus ne permettent pas de définir complètement le système, s'agissant d'un système libre. On introduit donc une nouvelle variable $G_0$, appelé taux d'atténuation, qui permettre de régler le jeu de valeurs des différents gains de boucle :

$$G_0 = \frac{M}{M+K_a}$$

Cette nouvelle variable a un gain physique, car elle correspond à l'amortissement de la commande du système par rapport à la perturbation en très hautes fréquences.

Les relations ci-dessus fournissent les résultats suivants pour la détermination des différents gains de boucle

de régulation $K_v$, $K_p$ et $K_a$ :

$$K_v = \frac{2\xi\omega_n M}{G_0}$$

$$K_p = \frac{\omega_n^2 M}{G_0}$$

$$K_a = \frac{(1 - G_o)M}{G_o}$$

Ainsi, il ressort de ces résultats qu'il suffit de régler les trois paramètres suivants $\xi$, $\omega_n$ et $G_0$ pour obtenir les trois gains de boucles de régulation du système. L'élaboration de la boucle de régulation selon l'invention permet donc de régler facilement le système, puisque le réglage est ramené à un choix de comportement physique du système dans la mesure où les trois paramètres identifiés ci-dessus sont caractéristiques de ce comportement. En effet, ces trois paramètres $\xi$, $\omega_n$ et $G_0$ correspondent respectivement à l'amortissement du système, à la rapidité de réponse du système par définition de sa pulsation propre, et à l'atténuation de la commande par rapport aux perturbations en hautes fréquences.

Dans le cas général où l'on ne considère plus le système comme étant parfait, le raisonnement est identique, mais des conditions apparaissent toutefois sur le choix de $\xi$ et $\omega_n$ en fonction de $\omega_0$, qui n'est pas choisie librement.

En effet, la reconstruction modélisée à la figure 1 des signaux d'accélération relative $\varepsilon_a$ et de vitesse relative $\varepsilon_v$ consiste à prendre en compte la fonction de transfert $\omega_0 s/(s+\omega_0)$ du capteur prévu sur le véhicule pour fournir directement l'accélération relative et la vitesse relative. $\omega_0$ dépend alors des caractéristiques intrinsèques du capteur. La condition sur le choix de $\xi$ et $\omega_n$ en fonction de $\omega_0$ est la suivante :

$$\omega_n < \xi\omega_0 ,$$

et

$$-\omega_n^2 + 2\xi\omega_n\omega_0 - \omega_0^2 + G_0\omega_0^2 < 0$$

Avec le choix du taux d'atténuation $G_o$ suivant :

$$\frac{G_0}{M} = \frac{\left(\omega_n^2 - 2\xi\omega_n\omega_0 + \omega_0^2\right)\omega_0^2}{\left(K_a + M\right)\omega_0^4} ,$$

et à partir de la fonction de transfert F d'ordre 4 approximée par une série de Taylor, on obtient alors les gains de boucle suivants :

$$K_v = \frac{2\omega_n M(-\omega_n + \xi\omega_0)}{G_0\omega_0}$$

$$K_p = \frac{\omega_n^2 M}{G_0}$$

$$K_a = -\frac{M(-\omega_n^2 + 2\xi\omega_n\omega_0 - \omega_0^2 + G_0\omega_0^2)}{G_0\omega_0} .$$

De la même façon que pour le modèle parfait, le choix de la valeur des paramètres $\xi$, $\omega_n$ et $G_0$, aisément compréhensible puisque caractéristique du comportement physique du système, permet avantageusement de fixer les gains de la boucle de régulation et ainsi de régler facilement la régulation de la distance de suivi.

Par ailleurs, l'architecture retenue avec la présence de la boucle en accélération est particulièrement avantageuse pour assurer la régulation de la distance inter-véhicules à basses vitesses où les distances de suivi sont relativement réduites. En effet, la boucle en accélération agissant aux hautes fréquences, elle permet au système de régulation de réagir rapidement à une variation forte d'accélération de la cible, améliorant ainsi la sécurité du fait des faibles distances de suivi à basses vitesses.

**Revendications**

1. Procédé de commande d'un système de régulation d'une distance inter-véhicules entre un véhicule cible et un véhicule suiveur, le système de régulation étant embarqué sur le véhicule suiveur, lequel comprend des moyens (60) de commande électronique de la vitesse du véhicule suiveur, ledit procédé comprenant l'élaboration d'une loi de commande (cmd) de régulation de la distance inter-véhicules, en réponse à un écart ($\varepsilon_v$) entre une valeur de la vitesse du véhicule suiveur (vit_suiveur) et une valeur de vitesse de consigne (vit_cible) correspondant à une valeur détectée de la vitesse du véhicule cible, et à un écart ($\varepsilon_p$) entre une valeur de la distance entre le véhicule cible et le véhicule suiveur et une valeur de distance de consigne (dist_consigne), les moyens de commande (60) de la vitesse du véhicule suiveur agissant pour réguler le comportement dynamique du véhicule suiveur sur la base de la loi de commande,
ledit procédé étant **caractérisé en ce que** la loi de commande (cmd) de régulation de la distance inter-véhicule est en outre élaborée en réponse à un écart ($\varepsilon_a$) entre une valeur de l'accélération du véhicule suiveur (acc_suiveur) et une valeur d'accélération de consigne (acc_cible) correspondant à une valeur détectée de l'accélération du véhicule cible.

2. Procédé selon la revendication 1, **caractérisé en ce que** l'élaboration de la loi de commande de régulation de la distance inter-véhicule comprend la multiplication de l'écart de vitesse ($\varepsilon_v$) par un gain en vitesse paramétrable ($K_v$), la multiplication de l'écart de distance ($\varepsilon_p$) par un gain en distance paramétrable ($K_p$) et la multiplication de l'écart d'accélération par un gain en accélération paramétrable ($K_a$).

3. Procédé selon la revendication 2, **caractérisé en ce que** les trois gains, respectivement en vitesse($K_v$), en distance ($K_p$) et en accélération ($K_v$), utilisés pour l'élaboration de la loi de commande (cmd) à partir des trois écarts, respectivement en vitesse ($\varepsilon_v$), en distance ($\varepsilon_p$) et en accélération ($\varepsilon_a$), sont déterminés en fixant les trois paramètres suivants : $\xi$, $\omega_n$ et $G_0$, correspondant respectivement à l'amortissement, la pulsation propre et le taux d'atténuation en hautes fréquences du système de régulation.

4. Procédé selon l'une quelconque des revendications 1 à 3, **caractérisé en ce que** la régulation du comportement dynamique du véhicule suiveur sur la base de la loi de commande (cmd) consiste à réguler une force motrice du véhicule.

**5.** Procédé selon la revendication 4, **caractérisé en ce que** la régulation de la force motrice du véhicule comprend le pilotage d'un moyen d'admission d'air pour les moteurs à essence ou d'un moyen d'injection pour les moteurs de type Diesel.

**6.** Procédé selon l'une quelconque des revendications précédentes, **caractérisé en ce que** la régulation du comportement dynamique du véhicule suiveur sur la base de la loi de commande (cmd) consiste à réguler une force de freinage.

**7.** Procédé selon l'une quelconque des revendications précédentes, **caractérisé en ce que** la valeur de la distance de consigne entre le véhicule cible et le véhicule suiveur est déterminée en fonction de la vitesse du véhicule suiveur.

**Claims**

**1.** Method of controlling a system for regulating an inter-vehicle distance between a target vehicle and a follower vehicle, the regulating system being on board the follower vehicle, which comprises means (60) for electronically controlling the speed of the follower vehicle, said method comprising the formulation of a control law (ctl) for regulating the inter-vehicle distance, in response to a deviation ($\varepsilon_v$) between a value of the speed of the follower vehicle (spd_follower) and a setpoint speed value (spd_target) corresponding to a detected value of the speed of the target vehicle, and to a deviation ($\varepsilon_p$) between a value of the distance between the target vehicle and the follower vehicle and a setpoint distance value (dist_setpoint), the means (60) for controlling the speed of the follower vehicle acting so as to regulate the dynamic behavior of the follower vehicle on the basis of the control law,
said method being **characterized in that** the control law (ctl) for regulating the inter-vehicle distance is furthermore formulated in response to a deviation ($\varepsilon_a$) between a value of the acceleration of the follower vehicle (acc_follower) and a setpoint acceleration value (acc_target) corresponding to a detected value of the acceleration of the target vehicle.

**2.** Method according to Claim 1, **characterized in that** the formulation of the control law for regulating the inter-vehicle distance entails multiplying the speed deviation ($\varepsilon_v$) by a parametrizable speed gain ($K_v$), multiplying the distance deviation ($\varepsilon_p$) by a parametrizable distance gain ($K_p$) and multiplying the acceleration deviation by a parametrizable acceleration gain ($K_a$).

**3.** Method according to Claim 2, **characterized in that** the three gains, respectively in speed ($K_v$), in distance ($K_p$) and in acceleration ($K_a$), used for formulating the control law (ctl) on the basis of the three deviations, respectively in speed ($\varepsilon_v$), in distance ($\varepsilon_p$) and in acceleration ($\varepsilon_a$), are determined by fixing the following three parameters: $\xi$, $\omega_n$ and $G_0$, corresponding respectively to the damping, the natural angular frequency and the attenuation rate at high frequencies of the regulating system.

**4.** Method according to any one of Claims 1 to 3, **characterized in that** the regulation of the dynamic behavior of the follower vehicle on the basis of the control law (ctl) consists in regulating a driving force of the vehicle.

**5.** Method according to Claim 4, **characterized in that** the regulation of the driving force of the vehicle comprises the governing of an air intake means for petrol engines or of an injection means for engines of Diesel type.

**6.** Method according to any one of the preceding claims, **characterized in that** the regulation of the dynamic behavior of the follower vehicle on the basis of the control law (ctl) consists in regulating a braking force.

**7.** Method according to any one of the preceding claims, **characterized in that** the value of the setpoint distance between the target vehicle and the follower vehicle is determined as a function of the speed of the follower vehicle.

**Patentansprüche**

**1.** Verfahren zur Steuerung eines Systems zur Regelung eines Fahrzeugabstands zwischen einem Zielfahrzeug und einem Folgefahrzeug, wobei das Regelungssystem sich an Bord des Folgefahrzeugs befindet, welches Einrichtungen (60) zur elektronischen Steuerung der Geschwindigkeit des Folgefahrzeugs enthält, wobei das Verfahren die Erarbeitung eines Steuerungsgesetzes (cmd) der Regelung des Fahrzeugabstands als Reaktion auf eine Abweichung ($\varepsilon_v$) zwischen einem Wert der Geschwindigkeit des Folgefahrzeugs (vit_suiveur) und einem Sollgeschwindigkeitswert (vit_cible) entsprechend einem erfassten Wert der Geschwindigkeit des Zielfahrzeugs, und auf eine Abweichung ($\varepsilon_p$) zwischen einem Wert des Abstands zwischen dem Zielfahrzeug und dem Folgefahrzeug und einem Sollabstandswert (dist_consigne) enthält, wobei die Steuereinrichtungen (60) der Geschwindigkeit des Folgefahrzeugs agieren, um das dynamische Verhalten des Folgefahrzeugs auf der Basis des Steuerungsgesetzes zu regeln, wobei das Verfahren **dadurch gekennzeichnet ist, dass** das Steuerungsgesetz (cmd) der Regelung des Fahrzeugabstands außerdem als Reaktion auf eine Abweichung ($\varepsilon_a$) zwischen einem Wert der Beschleunigung des Folgefahrzeugs (acc_suiveur) und einem Sollbeschleunigungswert (acc_cible) entsprechend einem erfassten Wert der Beschleunigung des Zielfahrzeugs erarbeitet wird.

2. Verfahren nach Anspruch 1, **dadurch gekennzeichnet, dass** die Erarbeitung des Steuerungsgesetzes der Regelung des Fahrzeugabstands die Multiplikation der Geschwindigkeitsabweichung ($\varepsilon_v$) mit einer parametrierbaren Geschwindigkeitsverstärkung ($K_v$), die Multiplikation der Abstandsabweichung ($\varepsilon_p$) mit einer parametrierbaren Abstandsverstärkung ($K_p$) und die Multiplikation der Beschleunigungsabweichung mit einer parametrierbaren Beschleunigungsverstärkung ($K_a$) enthält.

3. Verfahren nach Anspruch 2, **dadurch gekennzeichnet, dass** die drei Verstärkungen der Geschwindigkeit ($K_v$), des Abstands ($K_p$) bzw. der Beschleunigung ($K_a$), die zur Erarbeitung des Steuerungsgesetzes (cmd) ausgehend von den drei Abweichungen der Geschwindigkeit ($\varepsilon_v$), des Abstands ($\varepsilon_p$) bzw. der Beschleunigung ($\varepsilon_a$) verwendet werden, bestimmt werden, indem die drei folgenden Parameter festgelegt werden: $\xi$, $\omega_n$ und $G_0$, die der Dämpfung, der Eigenkreisfrequenz bzw. dem Dämpfungsgrad bei hohen Frequenzen des Regelungssystems entsprechen.

4. Verfahren nach einem der Ansprüche 1 bis 3, **dadurch gekennzeichnet, dass** die Regelung des dynamischen Verhaltens des Folgefahrzeugs auf der Basis des Steuerungsgesetzes (cmd) darin besteht, eine Antriebskraft des Fahrzeugs zu regeln.

5. Verfahren nach Anspruch 4, **dadurch gekennzeichnet, dass** die Regelung der Antriebskraft des Fahrzeugs die Steuerung einer Luftansaugeinrichtung für die Benzinmotoren oder einer Einspritzeinrichtung für die Dieselmotoren enthält.

6. Verfahren nach einem der vorhergehenden Ansprüche, **dadurch gekennzeichnet, dass** die Regelung des dynamischen Verhaltens des Folgefahrzeugs auf der Basis des Steuerungsgesetzes (cmd) darin besteht, eine Bremskraft zu regeln.

7. Verfahren nach einem der vorhergehenden Ansprüche, **dadurch gekennzeichnet, dass** der Wert des Sollabstands zwischen dem Zielfahrzeug und dem Folgefahrzeug in Abhängigkeit von der Geschwindigkeit des Folgefahrzeugs bestimmt wird.

# Fig. 1

**EP 2 032 407 B1**

**RÉFÉRENCES CITÉES DANS LA DESCRIPTION**

**Documents brevets cités dans la description**

- EP 612641 A
- US 6233515 B